# EUROPÄISCHE PATENTSCHRIFT

(11) **EP 3 199 258 B1**
(45) Veröffentlichungstag und Bekanntmachung des Hinweises auf die Patenterteilung: **29.04.2020**
(21) Anmeldenummer: 17000075.6
(22) Anmeldetag: 17.01.2017
(51) Int. Cl.: B21D 39/00, A47C 7/38, B21D 39/04, F16B 7/04, F16B 17/00, B60N 2/80, B60N 2/803, B60N 2/806

(54) **TRAGVORRICHTUNG EINER KOPFSTÜTZE, KOPFSTÜTZE UND VERFAHREN ZUR HERSTELLUNG EINER TRAGVORRICHTUNG**
SUPPORT DEVICE OF A HEADREST, HEADREST AND METHOD FOR MANUFACTURING A SUPPORT DEVICE
DISPOSITIF DE SUPPORT D'UN APPUI-TÊTE, APPUI-TÊTE ET PROCÉDÉ DE FABRICATION D'UN DISPOSITIF DE SUPPORT

(30) Priorität: 22.01.2016 DE 102016000572
(43) Veröffentlichungstag der Anmeldung: 02.08.2017
(73) Patentinhaber: GRAMMER AG, 92224 Amberg (DE)
(72) Erfinder: Preßl, Thomas, 92237 Sulzbach-Rosenberg (DE)
(74) Vertreter: Roche, von Westernhagen & Ehresmann

(56) Entgegenhaltungen:
- EP-A1- 0 701 921
- US-A1- 2005 191 121

## Beschreibung

Die Erfindung betrifft zunächst eine Tragvorrichtung einer Kopfstütze, insbesondere einer Fahrzeug-Kopfstütze. Fahrzeug ist im Sinne der Erfindung ein Land-, Luft-, oder ein Wasser-Fahrzeug.

Eine solche Tragvorrichtung ist aus offenkundiger Vorbenutzung bekannt. Sie umfasst eine erste Tragstange und eine zweite Tragstange und wenigstens einen Quersteg. Endbereiche des Querstegs sind mittels einer Befestigung an der ersten und der zweiten Tragstange gehalten. Die Befestigung ist von einer Schweißverbindung gebildet.

Aus EP 0 701 921 A1 ist ein Kopfstützenrahmen für Kraftfahrzeugsitze bekannt, welcher zwei vertikale Stangen aufweist, die mittels mehrerer Querstreben miteinander verbunden sind. Der Rahmen ist aus Kunststoff hergestellt. Die vertikal verlaufenden Tragstangen sind jeweils von Metallkernen verstärkt.

In US 2005/0 191 121 A1 ist eine Verbindungsvorrichtung beschrieben. Diese umfasst zwei vertikale Streben, welche mittels einer Traverse verbunden sind. Die Traverse umfasst an beiden Endbereichen vorstehende Zungen. Die vertikalen Streben sind einseitig mit Öffnungen zur Aufnahme eines Endbereichs der Traverse und an einer gegenüberliegenden Seite mit zwei kleinen Öffnungen zum Durchtritt der Zungen versehen. Zur Verbindung kann der Endbereich der Traverse in die große Öffnung eingeführt werden und die Zungen können durch die kleinen Öffnungen hindurchgesteckt werden. Anschließend werden die Zungen an der Außenseite der Streben umgebogen, so dass eine Befestigung gebildet ist.

Es war Aufgabe der Erfindung, eine Tragvorrichtung zu schaffen, die in Bezug auf die Herstellung und die Herstellungskosten weiter verbessert ist.

Die Aufgabe wurde gelöst durch eine Tragvorrichtung mit den Merkmalen des Anspruchs 1.

Die Tragvorrichtung einer Kopfstütze umfasst eine erste Tragstange und eine zweite Tragstange sowie einen die erste Tragstange und die zweite Tragstange miteinander verbindenden Quersteg, wobei der Quersteg mittels wenigstens einer Befestigung mit jeder der Tragstangen verbunden ist. D.h. der Quersteg kann mit wenigstens einer Befestigung mit der ersten Tragstange und mit wenigstens einer Befestigung mit der zweiten Tragstange verbunden sein. Der Quersteg steht in Kontakt mit jeder der Tragstangen. Wenigstens eine der Befestigungen ist von einem durch Fließbohren erzeugten Form- und / oder Stoffschluss gebildet.

Das Verfahren des Fließbohrens beruht darauf, dass zwischen dem Bohrer und dem Werkstück aufgrund großer Axialkraft in Längsrichtung des Bohrers sowie hoher Drehzahl eine so große Reibungswärme erzeugt wird, dass die Temperatur des Materials, welches in Kontakt mit dem Bohrer steht oder sich im Wärmeeinflussbereich befindet auf eine Temperatur von z.B. ca. 900°C ansteigt und leicht verformbar wird. Aufgrund der hohen Temperatur kann darüber hinaus zwischen zwei separaten in Kontakt stehenden Teilen ein Stoffschluss ausgebildet werden.

In Bezug auf die vorliegende Erfindung kann mit dem Verfahren des Fließbohrens ein Formschluss zwischen der Tragstange und dem Quersteg hergestellt werden, indem die Tragstange und / oder der Quersteg verformt werden. Außerdem kann an den Kontaktstellen zwischen dem Quersteg und der Tragstange ein Stoffschluss erzeugt werden.

Ein Vorteil des Verfahrens ist eine erhebliche Zeitersparnis in Bezug auf das bisher verwendete Schweißverfahren. Ein weiterer Vorteil besteht darin, dass die Herstellungskosten mit dem Verfahren reduziert werden können.

Gemäß einer Ausführungsform sind der Quersteg und / oder die Tragstangen von einem Rohr gebildet. Das kann z.B. fertigungstechnisch von Vorteil sein, weil das Material in diesem Fall leicht erwärmbar ist. Außerdem kann sich der Fließbohrer auf diese Weise axial in den Innenraum des Rohres hineinbewegen. Aufgrund des Übermaßes zwischen dem Bohrer und dem Innendurchmesser des Rohres entsteht Reibungswärme, wodurch das Material erwärmt wird.

Der Quersteg ist z.B. für die Festlegung relativ zu wenigstens einer der Tragstangen mit zumindest einer Anschlagfläche versehen, wobei die Anschlagfläche des Querstegs an einer Anschlagfläche der Tragstange anliegt. Wenn ein Endbereich des Querstegs z.B. eine Bohrung in der Tragstange durchgreift, kann der Kontakt zwischen der Anschlagfläche des Querstegs und der Anschlagfläche der Tragstange die axiale Position des Querstegs relativ zu der Tragstange festlegen. Eine der Anschlagflächen ist z.B. von einer Schulter gebildet. Diese kann z.B. durch Abdrehen des Querstegs erzeugt werden. Alternativ kann der Quersteg z.B. auch mit einem Materialauftrag versehen sein, welcher die Schulter ausbildet.

Wenigstens ein Endbereich des Querstegs ist z.B. in einer Aussparung der Tragstange angeordnet. Die Aussparung ist z.B. von einer Bohrung gebildet. Z.B. ist ein erster Endbereich des Querstegs in einer Aussparung einer ersten Tragstange und ein zweiter Endbereich des Querstegs ist in einer Aussparung einer zweiten Tragstange angeordnet. Der Endbereich kann die Aussparung z.B. durchgreifen.

Der Endbereich bildet z.B. einen Kopf, welcher an einer Außenseite der Tragstange anliegt. Z.B. durchgreift der Endbereich die Aussparung in der Tragstange und bildet einen Kopf, welcher an einer Außenseite der Tragstange anliegt.

Wenn die Tragstange und / oder der Quersteg als Rohr, insbesondere als Rohr mit kreiszylindrischem Querschnitt, ausgebildet sind, kann wenigstens ein Endbereich der Tragstange bzw. des Querstegs flachgepresst sein. Auf diese Weise können sich der Quersteg und die Tragstange flächig aneinander anlegen.

Gemäß einem zweiten Aspekt der Erfindung betrifft die Erfindung eine Kopfstütze.

Eine solche Kopfstütze ist aus offenkundiger Vorbenutzung bekannt. Sie umfasst einen Kopfkasten, welchem eine Kopfanlagefläche zugeordnet ist. Der Kopfkasten ist an einer Tragvorrichtung gehalten, welcher an einem Sitz, insbesondere an einem Fahrzeugsitz, lagerbar ist. Die Tragvorrichtung umfasst wenigstens einen Quersteg mit zwei Endbereichen, wobei jeder Endbereich mittels einer Befestigung mit jeweils einer Tragstange verbunden ist. Die Befestigung ist von einer Schweißverbindung gebildet.

Es war Aufgabe der Erfindung eine Kopfstütze zu schaffen, welche kostengünstiger herstellbar ist und den Sicherheitsanforderungen genügt.

Die Aufgabe wurde gelöst durch eine Kopfstütze mit den Merkmalen des Anspruchs 6.

Die Kopfstütze umfasst einen Kopfkasten, welchem eine Kopfanlagefläche unmittelbar oder mittelbar zugeordnet ist. Der Kopfkasten ist an einer Tragvorrichtung gehalten, welche an einem Sitz, insbesondere an einem Fahrzeugsitz, lagerbar ist. Die Tragvorrichtung ist gemäß dem ersten Erfindungsaspekt ausgebildet. D.h., sie umfasst wenigstens einen Quersteg mit zwei Endbereichen, wobei ein erster Endbereich mittels wenigstens einer Befestigung mit einer ersten Tragstange und ein zweiter Endbereich mittels wenigstens einer Befestigung mit einer zweiten Tragstange verbunden ist. Wenigstens eine der Befestigungen ist von einem durch Fließbohren hergestellten Formschluss und / oder Stoffschluss gebildet.

Hinsichtlich der Merkmale des Fließbohrverfahrens sowie der Vorteile der Erfindung und hinsichtlich der Ausführungsformen der Erfindung wird Bezug genommen auf die Ausführungen zu dem ersten Aspekt der Erfindung.

Die Erfindung betrifft des Weiteren ein Verfahren zur Herstellung einer Tragvorrichtung.

Bei einem aus offenkundiger Vorbenutzung bekannten Verfahren zur Herstellung einer Tragvorrichtung wurde ein Quersteg mit einer Befestigung mit einer ersten Tragstange und mit einer anderen Befestigung mit einer zweiten Tragstange verbunden. Die Befestigungen erfolgten durch einen Schweißvorgang.

Es war Aufgabe der Erfindung, ein Verfahren zur Herstellung einer Tragvorrichtung zu schaffen, welches eine kostengünstige Herstellung ermöglicht und wobei die Sicherheitsanforderungen an die Tragvorrichtung gewährleistet sind.

Die Aufgabe wurde gelöst durch ein Verfahren mit den Merkmalen des Anspruchs 7.

Erfindungsgemäß werden zwei Tragstangen und wenigstens ein Quersteg bereitgestellt. Der Quersteg sowie die erste Tragstange und die zweite Tragstange werden zueinander positioniert. Ein erster Endbereich des Querstegs wird an der ersten Tragstange und ein zweiter Endbereich des Querstegs wird an der zweiten Tragstange mittels des Fließbohrens formschlüssig und / oder stoffschlüssig befestigt.

Mit dem erfindungsgemäßen Verfahren kann eine Zeitersparnis und eine Kostenersparnis bei der Herstellung der Tragvorrichtung erreicht werden.

Der Quersteg und / oder die Tragstange weisen z.B. Formschlussmittel auf, mittels welcher der Quersteg und die Tragstange vor dem Fließbohren in eine Vormontageposition gebracht werden können. Z. B. kann wenigstens eine der Tragstangen mit einer Aussparung versehen werden, in welcher der Quersteg angeordnet wird. Gemäß einer Alternative kann auch die Tragstange in einer Aussparung des Querstegs angeordnet werden. In letzterem Fall weist z.B. der Quersteg an wenigstens einem Endbereich eine Aussparung auf.

Z.B. wird der Quersteg derart zu der ersten Tragstange und / oder der zweiten Tragstange positioniert, dass wenigstens ein Endbereich des Querstegs eine Aussparung in der Tragstange durchgreift. Insbesondere wird ein erster Endbereich des Querstegs durch eine Aussparung in der ersten Tragstange und ein zweiter Endbereich des Querstegs durch eine Aussparung der zweiten Tragstange geführt. Z.B. wird der Quersteg soweit durch die jeweilige Aussparung geführt, bis ein Anschlag des Querstegs mit einer Fläche der Tragstange in Kontakt gerät.

Der Endbereich des Querstegs kann z.B. jeweils soweit durch die Aussparung geführt werden, dass er in Bezug auf eine Außenseite der Tragstange einen Überstand bildet. Dieser Überstand kann z.B. während des Fließbohrens umgeformt werden, so dass er nach dem Fließbohren einen Kopf bildet, welcher eine Bewegung des Querstegs in Richtung seiner Längsachse relativ zu der Tragstange begrenzt.

Damit der Überstand eine definierte Länge aufweist, kann der Quersteg mit wenigstens einer der Tragstangen ein Anschlagflächenpaar bilden, welches die Durchstecklänge des Querstegs durch die Aussparung begrenzt.

Der Vorgang des Positionierens schließt z.B. eine Fixierung der Tragstangen sowie des wenigstens einen Querstegs ein.

Weitere Vorteile ergeben sich anhand eines in den Fig. schematisch dargestellten Ausführungsbeispiels. Es zeigen:
Fig. 1 eine Frontansicht einer Kopfstütze mit einem Kopfkasten, welcher an einem Tragstangenbügel gelagert ist,
Fig. 2 eine Explosionsdarstellung des Tragstangenbügels mit zwei Tragstangen sowie eines ersten Querstegs und eines zweiten Querstegs,
Fig. 3 in Anlehnung an Fig. 2 eine Explosionsdarstellung, wobei auf dem ersten Quersteg und auf dem zweiten Quersteg Lenker zur Halterung des Kopfkastens montiert sind,

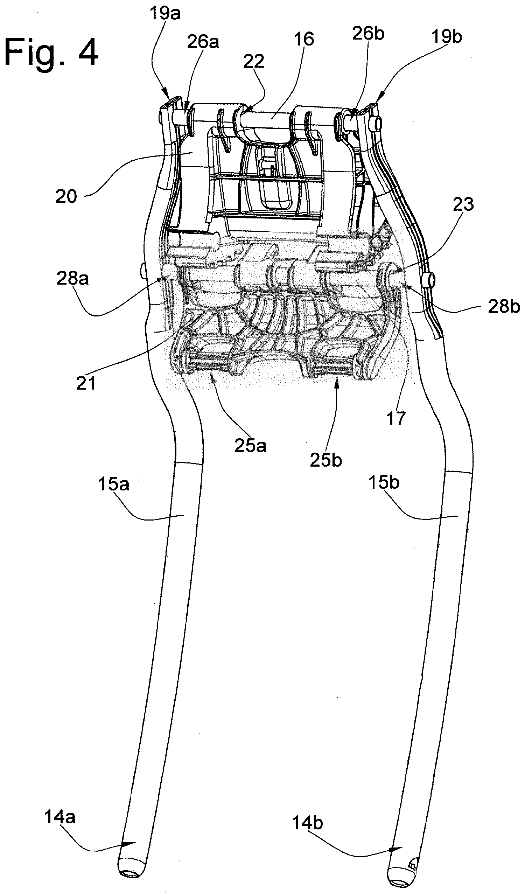

Fig. 4 eine Darstellung in Anlehnung an Fig. 3, wobei Endbereiche des ersten Querstegs und Endbereiche des zweiten Querstegs in einer Vormontageposition Aussparungen in den Tragstangen durchgreifen,
Fig. 5 eine Darstellung des Tragstangenbügels mit daran gehaltenen Lenkern nach dem Ausbilden der Befestigungen,
Fig. 6 eine vergrößerte Darstellung einer Tragstange und eines Querstegs sowie eines Fließbohrers zum Herstellen der Befestigung,
Fig. 7 in Anlehnung an Fig. 6 eine Darstellung der Tragstange mit dem daran befestigten Quersteg.

Eine Kopfstütze insgesamt ist in den Fig. mit dem Bezugszeichen 10 bezeichnet. Gleiche Bezugszeichen in den unterschiedlichen Fig. bezeichnen entsprechende Teile, auch wenn kleine Buchstaben nachgestellt oder weggelassen sind.

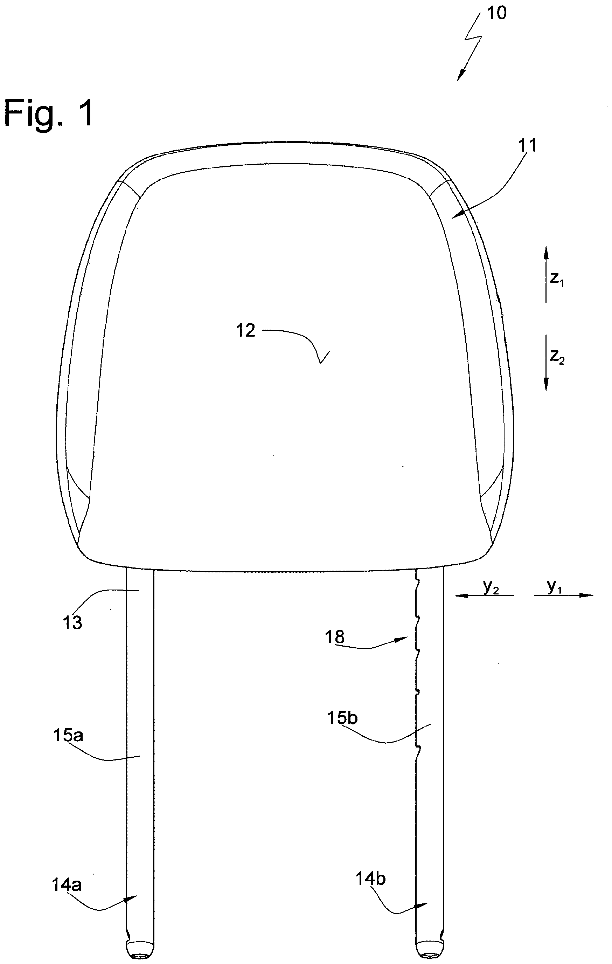

In Fig. 1 ist eine Frontansicht der Kopfstütze 10 dargestellt. Die Kopfstütze 10 umfasst einen Kopfkasten 11 mit einer Kopfanlagefläche 12. Der Kopfkasten 11 ist auf einer Tragvorrichtung 13 gelagert, die Tragstangen 15a und 15b mit freien Endbereichen 14a und 14b umfasst.

Die Kopfstütze 10 kann an einer nicht dargestellten Rückenlehne eines Fahrzeugsitzes gelagert werden, indem die freien Endbereiche 14a und 14b jeweils mit einer an der Rückenlehne befestigten Aufnahme in Eingriff gebracht werden. Mittels einer ebenfalls nicht dargestellten Verriegelungsvorrichtung kann der Tragstangenbügel 13 in unterschiedlichen Relativpositionen zu den Aufnahmen in Richtung z1 oder z2 verriegelt werden. Dafür ist an der Tragstange 15b eine sich in Richtung z1 erstreckende Anordnung von Rastkerben 18 ausgebildet. Die Rastkerben wirken in bekannter Weise mit einem Verriegelungselement zusammen, welches an der Aufnahme befestigt ist.

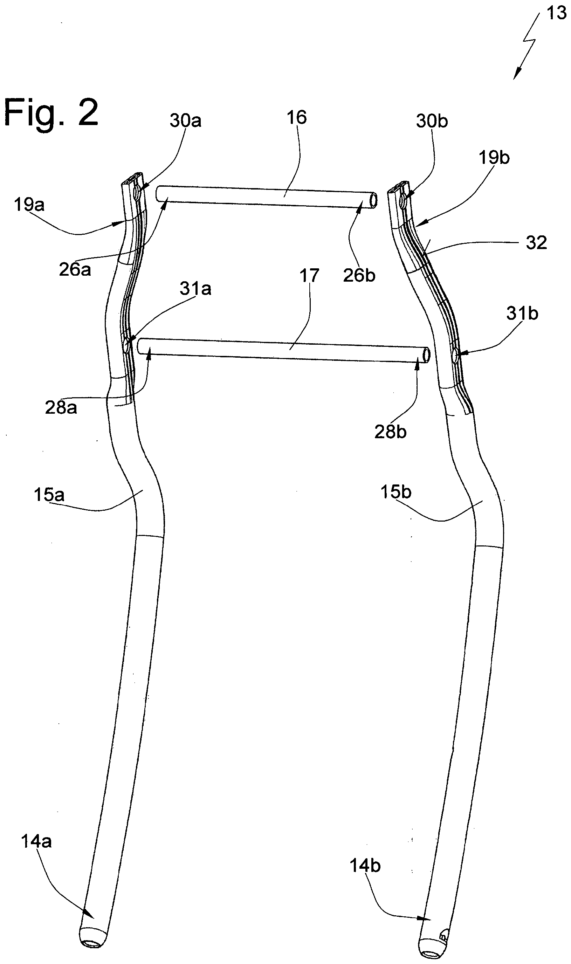

Fig. 2 ist eine Explosionsdarstellung des Tragstangenbügels 13. Der Tragstangenbügel 13 umfasst die Tragstangen 15a und 15b sowie einen ersten Quersteg 16 und einen zweiten Quersteg 17. Dem Endbereich 14a gegenüberliegend ist an der Tragstange 15a ein Endbereich 19a ausgebildet. In gleicher Weise umfasst die Tragstange 15b dem Endbereich 14b gegenüberliegend einen Endbereich 19b. Die Tragstangen 15a und 15b sind weitgehend von einem kreiszylindrischen Rohr gebildet. An dem Endbereich 19a ist die Tragstange 15a und an dem Endbereich 19b ist die Tragstange 15b abgeflacht. Der Endbereich 19a umfasst Aussparungen 30a und 31a und der Endbereich 19b umfasst Aussparungen 30b und 31b. Die Aussparungenn 30a, 30b, 31a und 31b dienen der Halterung der Querstege 16 und 17, was weiter unten noch genauer erläutert wird.

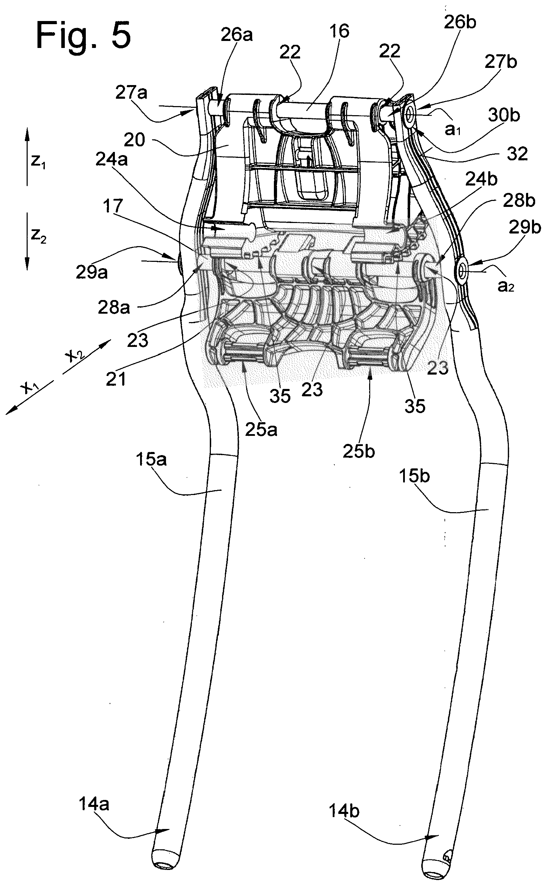

Fig. 5 zeigt den fertig montierten Tragstangenbügel 13, wobei an dem Quersteg 16 ein oberer Lenker 20 und an dem Quersteg 17 ein unterer Lenker 21 montiert ist. Der Lenker 20 ist um eine Längsachse a1 des Querstegs 16 schwenkbar und der Lenker 21 ist um eine Längsachse a2 des Querstegs 17 schwenkbar. Der Lenker 20 weist dafür zu der Längsachse a1 konzentrische Aussparungen 22 und der Lenker 21 weist zu der Längsachse a2 konzentrische Aussparungen 23 auf. Die Aussparungen 22a und 22b werden von dem Lenker 20 durchgriffen und die Aussparungen 23a und 23b werden von dem Lenker 21 durchgriffen.

Ein Endbereich 26a des Querstegs 16 ist mittels einer Befestigung 27a an der Tragstange 15a und ein Endbereich 26b des Querstegs 16 ist mittels einer Befestigung 27b an der Tragstange 15b befestigt. In gleicher Weise ist ein Endbereich 28a des Querstegs 17 ist mittels einer Befestigung 29a an der Tragstange 15a und ein Endbereich 28b des Querstegs 17 mittels einer Befestigung 29b an der Tragstange 15b befestigt. Die Befestigungen 27a und 27b sowie 29a und 29b bilden einen Formschluss sowie einen Stoffschluss zwischen dem Quersteg und der jeweiligen Tragstange.

Der Formschluss wird anhand der Befestigung 27b erläutert. Der Endbereich 26b des Querstegs 16 ist durch die Aussparung 30b hindurchgeführt und ringstegförmig an eine Außenseite 32 der Tragstange 15b angelegt. Mittels der Befestigung 27b wird zugleich ein Stoffschluss zwischen dem Quersteg 16 und der Tragstange 15b ausgebildet. Die Befestigungen 27a, 29a und 29b sind in gleicher Weise ausgebildet wie die Befestigung 27b. Die Befestigung 27a bildet somit einen Formschluss und einen Stoffschluss zwischen dem Quersteg 16 und der Tragstange 15a, die Befestigung 29a bildet einen Formschluss und einen Stoffschluss zwischen dem Quersteg 17 und der Tragstange 15a und die Befestigung 29b bildet einen Formschluss und einen Stoffschluss zwischen dem Quersteg 17 und der Tragstange 15b. Auf diese Weise wird eine Bewegung der Querstege 16 und 17 in die Richtungen y1 und y2 durch Formschluss und durch Stoffschluss gewährleistet.

In Fig. 5 ist ferner zu erkennen, dass der obere Lenker 20 Haltemittel 24a und 24b und der untere Lenker 21 Haltemittel 25a und 25b ausbilden, welche der verstellbaren Lagerung und Halterung des Kopfkastens 11 dienen. Der obere Lenker 20 bildet mittels der Haltemittel 24a und 24b mit dem Kopfkasten 11 ein Schwenkgelenk und der untere Lenker 21 bildet mittels der Haltemittel 25a und 25b mit dem Kopfkasten 11 ein Schwenkgelenk. Insgesamt bildet der Kopfkasten 11 mit den Querstegen 16 und 17 sowie mit den Lenkern 20 und 21 ein Viergelenk. Mittels der verstellbaren Lagerung des Kopfkastens 11 kann dieser in unterschiedliche Positionen in die Richtungen x1, x2 und z1, z2 verstellt und mittels einer Verriegelungsvorrichtung 35 in der jeweiligen Position arretiert werden.

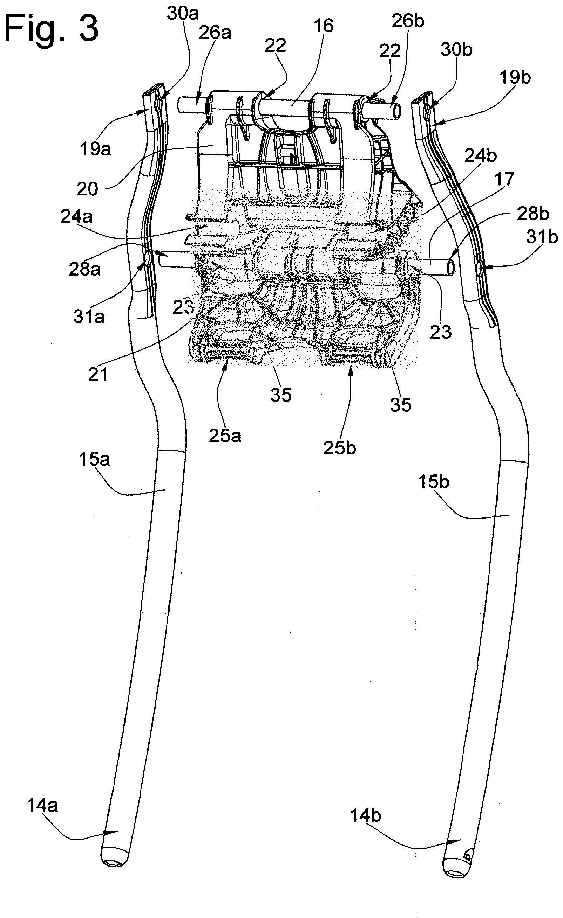

Das Verfahren der Herstellung soll nachfolgend beschrieben werden. Zunächst werden gemäß Fig. 2 die Tragstangen 15a und 15b sowie die Querstege 16 und 17 bereitgestellt. Der obere Lenker 20 wird gemäß Fig. 3 anschließend an dem Quersteg 16 montiert, so dass der Quersteg 16 die Aussparungen 22 durchgreift. Der untere Lenker 21 wird so an dem Quersteg 17 montiert, dass der Quersteg 17 die Aussparungen 23 durchgreift.

Anschließend werden der Endbereich 26a durch die Aussparung 30a und der Endbereich 28a durch die Aussparung 31a geführt, so dass der jeweilige Endbereich auf der Außenseite 32 der Tragstange 15a einen Überstand L bildet. In gleicher Weise werden der Endbereich 26b durch die Aussparung 30b und der Endbereich 28b durch die Aussparung 31b geführt. Die darauffolgende Herstellung der Befestigung 27a wird stellvertretend für alle Befestigungen 27a, 27b sowie 29a und 29b, die in gleicher Weise hergestellt werden, nachfolgend beschrieben.

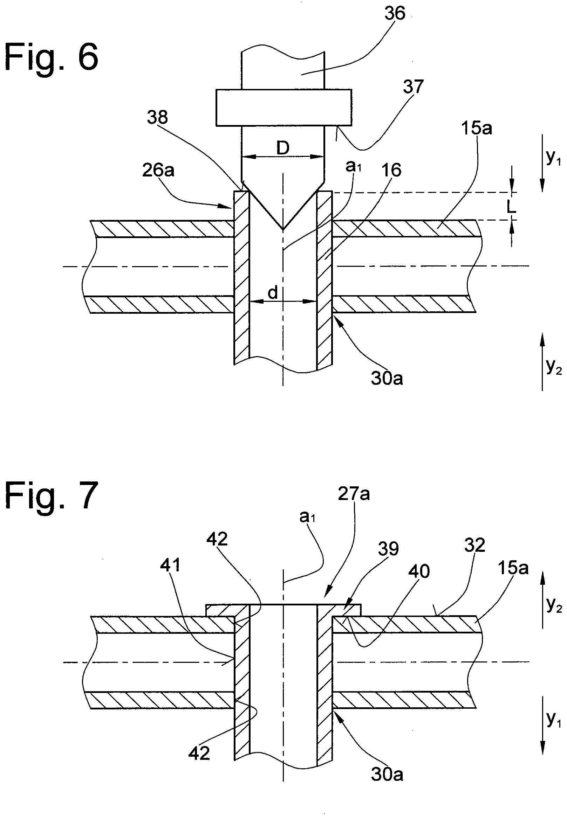

Gemäß Fig. 6 wird koaxial zur Längsachse a1 des Querstegs 16 ein Fließbohrer 36 in einen Innenraum des als Rohr ausgebildeten Querstegs 16 eingeführt. Der Außendurchmesser D des Fließbohrers 36 weist in Bezug auf den Innendurchmesser d des Querstegs 16 ein leichtes Übermaß auf. Der Fließbohrer rotiert mit einer hohen Drehzahl und erwärmt das Material auf z.B. ca. 900°C. Der Kontakt einer Ringschulter 37 des Fließbohrers 36 mit einer Stirnfläche 38 des Querstegs 16 bewirkt, dass der durch die Erhitzung weich gewordene Endbereich 26a zu einem Ringsteg 39 umgeformt und an die Außenseite 32 angelegt wird.

Aufgrund der großen Erwärmung des Materials des Querstegs 16 und des angrenzenden Materials der Tragstange 15a wird ein Stoffschluss zwischen der Außenseite 32 der Tragstange 15a und einer Unterseite 40 des Ringstegs 39 sowie zwischen einer Außenfläche 41 des Querstegs 16 und einer Laibung 42 der Aussparung 30a gebildet. Zusätzlich ist gemäß Fig. 7 zwischen der Tragstange 15a und dem Ringsteg 39 ein Formschluss ausgebildet, welcher verhindert, dass sich der Quersteg 16 in Richtung y1 relativ zu der Tragstange 15a bewegen kann. Weil der Quersteg 16 an dem Endbereich 26b ebenfalls einen Ringsteg 39 bildet, wird auch eine Bewegung in Richtung y2 verhindert. Zusätzlich verhindert der Stoffschluss eine Bewegung der Querstege 16 und 17 in die Richtungen y1 und y2.

Insbesondere können z.B. zwei Befestigungen 27a und 27b oder 29a und 29b jeweils gleichzeitig durch Fließbohren hergestellt werden. Gemäß einer Alternative können auch alle Befestigungen 27a, 27b, 29a und 29b gleichzeitig durch Fließbohren hergestellt werden.

In einem weiteren Schritt werden an dem Kopfkasten 11 ausgebildete horizontal verlaufende obere Stegbereiche (nicht dargestellt) mit den Haltemitteln 24a und 24b verrastet, so dass Schwenkgelenke mit der Schwenkachse a1 gebildet werden. Außerdem werden an dem Kopfkasten 11 ausgebildete horizontal verlaufende untere Aufnahmen (ebenfalls nicht dargestellt) mit den Haltemitteln 25a und 25b verrastet, so dass Schwenkgelenke mit der Schwenkachse a2 gebildet werden.

## Patentansprüche

1. Tragvorrichtung (13) für eine Kopfstütze (10) mit einer ersten Tragstange (15a) und mit einer zweiten Tragstange (15b) und mit wenigstens einem die erste Tragstange (15a) und die zweite Tragstange (15b) miteinander verbindenden Quersteg (16, 17), wobei mindestens ein Quersteg (16, 17) mittels wenigstens einer Befestigung (27a, 27b, 29a, 29b) mit der ersten Tragstange (15a) und mit der zweiten Tragstange (15b) verbunden ist, **dadurch gekennzeichnet, dass** die Befestigung (27a, 27b, 29a, 29b) von einem durch Fließbohren erzeugten Formschluss und / oder Stoffschluss gebildet ist.

2. Tragvorrichtung nach Anspruch 1, **dadurch gekennzeichnet, dass** der Quersteg (16, 17) und / oder die Tragstangen von einem Rohr gebildet sind.

3. Tragvorrichtung nach einem der Ansprüche 1 oder 2, **dadurch gekennzeichnet, dass** der Quersteg (16, 17) und die Tragstangen zur Begrenzung der Relativbewegung mit zusammenwirkenden Anschlagflächen versehen sind.

4. Tragvorrichtung nach einem der vorangehenden Ansprüche, **dadurch gekennzeichnet, dass** wenigstens ein Endbereich (26a, 26b, 28a, 28b) des Querstegs (16, 17) eine Aussparung in der Tragstange (15a, 15b) durchgreift.

5. Tragvorrichtung nach einem der vorangehenden Ansprüche, **dadurch gekennzeichnet, dass** wenigstens ein Endbereich (26a, 26b, 28a, 28b) des Querstegs (16, 17) einen Kopf bildet, welcher an eine Außenseite (32) der Tragstange (15a, 15b) angelegt ist.

6. Kopfstütze mit einem Kopfkasten (11), welcher mittels einer Tragvorrichtung (13) an der Rückenlehne eines Fahrzeugsitzes lagerbar ist, **dadurch gekennzeichnet, dass** die Tragvorrichtung (13) nach einem der Ansprüche 1 bis 5 ausgebildet ist.

7. Verfahren zur Herstellung einer Kopfstütze, wobei eine erste Tragstange (15a) und eine zweite Tragstange (15b) sowie wenigstens ein Quersteg (16, 17) bereitgestellt werden, wobei ein erster Endbereich (26a, 28a) des Querstegs (16, 17) an der ersten Tragstange (15a) und ein zweiter Endbereich (26b, 28b) des Querstegs (16, 17) an der zweiten Tragstange (15b) mittels einer Befestigung (27a, 27b, 29a, 29b) befestigt wird, **dadurch gekennzeichnet, dass** mindestens die Befestigung (27a) des ersten Endbereichs an der ersten Tragstange erzeugt wird, indem der erste Endbereich (26a) in Kontakt mit der ersten Tragstange (15a) gebracht wird und dass durch ein Fließbohrvorgang in einem Kontaktbereich zwischen dem ersten Endbereich (26a) und der ersten Tragstange (15a) eine Erwärmung und eine Anpresskraft in Längsrichtung des Bohrers erzeugt wird, wobei der erste Endbereich (26a) und die erste Tragstange (15a) stoffschlüssig und / oder formschlüssig aneinander befestigt werden.

8. Verfahren nach Anspruch 7 zur Herstellung einer Kopfstütze, **dadurch gekennzeichnet, dass** der erste Endbereich (26a) in Kontakt mit der ersten Tragstange (15a) gebracht wird, indem der erste Endbereich (26a) in einer Aussparung (30a) der Tragstange (15a) angeordnet wird.

9. Verfahren nach Anspruch 7 oder 8 zur Herstellung einer Kopfstütze, **dadurch gekennzeichnet, dass** wenigstens ein Endbereich (26a, 26b, 28a, 28b) des Querstegs (16, 17) während des Fließbohrens zu einem Kopf (39) umgeformt und an eine Außenseite (32) der Tragstange (15a, 15b) angelegt wird.

10. Verfahren nach einem der Ansprüche 7 bis 9 zur Herstellung einer Kopfstütze, **dadurch gekennzeichnet, dass** vor dem Verfahrensschritt des Positionierens der Endbereiche (26a, 26b, 28a, 28b) des Querstegs (16, 17) der Quersteg durch die Öffnung (22, 23) wenigstens eines hülsenförmigen oder ringförmigen Haltemittels (24a, 24b, 25a, 25b) eines Funktionsteils der Kopfstütze (10) geführt wird.

## Claims

1. Support device (13) of a headrest (10) with a first support rod (15a) and with a second support rod (15b) and with at least one cross web (16, 17) connecting the first support rod (15a) and the second support rod (15b) to one another, wherein at least one cross web (16, 17) is connected by means of at least one fastening (27a, 27b, 29a, 29b) to the first support rod (15a) and to the second support rod (15b), **characterised in that** the fastening (27a, 27b, 29a, 29b) is formed by a positive-locking and/or materially-bonded connection produced by flow drilling.

2. Support device according to claim 1, **characterised in that** the cross web (16, 17) and/or the support rods are formed by a pipe.

3. Support device according to any one of claims 1 or 2, **characterised in that** the cross web (16, 17) and the support rods are provided with cooperating impact surfaces to delimit the relative movement.

4. Support device according to any one of the preceding claims, **characterised in that** at least one end region (26a, 26b, 28a, 28b) of the cross web (16, 17) engages through a recess in the support rod (15a, 15b).

5. Support device according to any one of the preceding claims, **characterised in that** at least one end region (26a, 26b, 28a, 28b) of the cross web (16, 17) forms a head which is joined to an outer side (32) of the support rod (15a, 15b).

6. Headrest with a head box (11) which can be mounted on the backrest of a vehicle seat by means of a support device (13), **characterised in that** the support device (13) is formed according to any one of claims 1 to 5.

7. Method for manufacturing a headrest, wherein a first support rod (15a) and a second support rod (15b) and at least one cross web (16, 17) are provided, wherein a first end region (26a, 28a) of the cross web (16, 17) is fastened on the first support rod (15a) and a second end region (26b, 28b) of the cross web (16, 17) is fastened on the second support rod (15b) by means of a fastening (27a, 27b, 29a, 29b), **characterised in that** at least the fastening (27a) of the first end region is produced on the first support rod by the first end region (26a) being brought into contact with the first support rod (15a) and **in that**, by way of a flow drilling operation in a contact region between the first end region (26a) and the first support rod (15a), heating and a pressing force in the longitudinal direction of the drill are produced, wherein the first end region (26a) and the first support rod (15a) are fastened to one another in a materially-bonded and/or positive-locking manner.

8. Method according to claim 7 for manufacturing a headrest, **characterised in that** the first end region (26a) is brought into contact with the first support rod (15a) by the first end region (26a) being arranged in a recess (30a) of the support rod (15a).

9. Method according to claim 7 or 8 for manufacturing a headrest, **characterised in that** at least one end region (26a, 26b, 28a, 28b) of the cross web (16, 17) is formed into a head (39) during the flow drilling and is joined to an outer side (32) of the support rod (15a, 15b).

10. Method according to any one of claims 7 to 9 for manufacturing a headrest, **characterised in that**, prior to the method step of positioning the end regions (26a, 26b, 28a, 28b) of the cross web (16, 17), the cross web is guided through the opening (22, 23) of at least one sleeve-shaped or circular-shaped retaining means (24a, 24b, 25a, 25b) of a functional part of the headrest (10) .

## Revendications

1. Dispositif de support (13) pour un appuie-tête (10) avec une première barre de support (15a) et une deuxième barre de support (15b) et avec au moins une tige transversale (16, 17) reliant entre elles la première barre de support (15a) et la deuxième barre de support (15b), dans lequel au moins une tige transversale (16, 17) est reliée au moyen d'au moins une fixation (27a, 27b, 29a, 29b) à la première barre de support (15a) et à la deuxième barre de support (15b), **caractérisé en ce que** la fixation (27a, 27b, 29a, 29b) est formée par un ancrage par complémentarité de forme et/ou un ancrage par adhérence créés par fluoperçage.

2. Dispositif de support selon la revendication 1, **caractérisé en ce que** la tige transversale (16, 17) et/ou les barres de support sont constituées par un tube.

3. Dispositif de support selon une des revendications 1 ou 2, **caractérisé en ce que** la tige transversale (16, 17) et les barres de support sont dotées de surfaces de butée coopérant entre elles pour limiter le mouvement relatif.

4. Dispositif de support selon une des revendications précédentes, **caractérisé en ce qu'**au moins une région terminale (26a, 26b, 28a, 28b) de la tige transversale (16, 17) pénètre dans un orifice ménagé dans la barre de support (15a, 15b).

5. Dispositif de support selon une des revendications précédentes, **caractérisé en ce qu'**au moins une région terminale (26a, 26b, 28a, 28b) de la tige transversale (16, 17) forme une tête qui est appliquée sur une face extérieure (32) de la barre de support (15a, 15b).

6. Appuie-tête doté d'un caisson de tête (11) qui peut être monté au moyen d'un dispositif de support (13) sur le dossier d'un siège d'automobile, **caractérisé en ce que** le dispositif de support (13) est constitué selon une des revendications 1 à 5.

7. Procédé pour la fabrication d'un appuie-tête, dans lequel une première barre de support (15a) et une deuxième barre de support (15b) ainsi qu'au moins une tige transversale (16, 17) sont fournies, une première région terminale (26a, 28a) de la tige transversale (16, 17) étant fixée sur la première barre de support (15a) et une deuxième région terminale (26b, 28b) de la tige transversale (16, 17) étant fixée sur la deuxième barre de support (15b) au moyen d'une fixation (27a, 27b, 29a, 29b), **caractérisé en ce qu'**au moins la fixation (27a) de la première région terminale est produite au niveau de la première barre de support, la première région terminale (26a) étant mise en contact avec la première barre de support (15a), et qu'un échauffement et une force de serrage dans la direction longitudinale du foret sont produits dans une région de contact entre la première région terminale (26a) et la première barre de support (15a) par une opération de fluoperçage, la première région terminale (26a) et la première barre de support (15a) étant fixées l'une à l'autre par un ancrage par complémentarité de forme et/ou un ancrage par adhérence.

8. Procédé selon la revendication 7 pour la fabrication d'un appuie-tête, **caractérisé en ce que** la première région terminale (26a) est mise en contact avec la première barre de support (15a), la première région terminale (26a) étant disposée dans un orifice (30a) de la première barre de support (15a).

9. Procédé selon la revendication 7 ou 8 pour la fabrication d'un appuie-tête, **caractérisé en ce qu'**au moins une région terminale (26a, 26b, 28a, 28b) de la tige transversale (16, 17) et transformée en forme de tête (39) pendant le fluoperçage et appliquée sur une face extérieure (32) de la barre de support (15a, 15b).

10. Procédé selon une des revendications précédentes pour la fabrication d'un appuie-tête, **caractérisé en ce qu'**avant l'étape de positionnement des régions terminales (26a, 26b, 28a, 28b) de la tige transversale (16, 17), la tige transversale est conduite à travers l'ouverture (22, 23) d'au moins un moyen de maintien en forme de manchon ou d'anneau (24a, 24b, 25a, 25b) d'un élément fonctionnel de l'appuie-tête.
